# EUROPEAN PATENT SPECIFICATION

(11) **EP 2 080 427 B1**
(45) Date of publication and mention of the grant of the patent: **10.03.2010**
(21) Application number: 07822026.6
(22) Date of filing: 30.10.2007
(51) Int. Cl.: H05K 5/02, H01R 13/52, H02G 3/08

(54) **SEALED CASING FOR ELECTRICAL APPARATUS AND ELECTRICAL APPARATUS COMPRISING SAID CASING.**
ABGEDICHTETES GEHÄUSE FÜR EINE ELEKTRISCHE VORRICHTUNG UND ELEKTRISCHE VORRICHTUNG MIT DEM GEHÄUSE
BOÎTIER HERMÉTIQUE POUR APPAREIL ÉLECTRIQUE ET APPAREIL ÉLECTRIQUE COMPRENANT LEDIT BOÎTIER.

(30) Priority: 09.11.2006 IT RM20060194 U
(43) Date of publication of application: 22.07.2009
(73) Proprietor: Bticino S.p.A., 20154 Milano (IT)
(72) Inventor: VECCHI, Cristian, 21056 Induno Olona (Varese) (IT)
(74) Representative: Carangelo, Pierluigi
(86) International application number: PCT/EP2007/061672
(87) International publication number: WO 2008/055813

(56) References cited:
- EP-A- 1 251 600
- WO-A-01/57980
- US-B1- 6 737 576

## Description

The present invention refers to the technical field of electrical apparatuses and in particular to a sealed casing for electrical apparatuses.

In the field of electrical apparatuses, it is known to use sealed casings in order to allow wall mounting of an electrical apparatus and protect said apparatus against possible infiltrations of water, liquids in general and/or moisture. Typically, but in a non exclusive way, said casings are to be mounted in outdoor environments or generally environments with water sources.

A first type of sealed casings of the prior art is represented by casings including a base box and a snap closing lid for closing said base box. These casings are provided with suitable sealing means, interposed between the base box and the lid, such as to ensure a high level of protection against water and moisture infiltrations when the lid is closed. Though, if for instance the electrical apparatus is an electrical socket, the coupling of a plug attached to a cable to the electric socket, due to the size of the plug body and to an electrical cable positioned between the lid and the base box, prevents the closing of the lid (or in some cases only a partial closing), so that the protection of the casing is severely reduced.

Therefore there is a need to provide sealed casings for electrical apparatus which may ensure a high level of protection (for example the so called IP66 standard, according to international regulation IEC 60529), even when the electrical apparatus is associated to an electric cables exiting from the sealed casing.

Therefore a second type of sealed casings has been developed, comprising casing including a boxed base and a lid, which, when the lid is closed, provide a passage defined between the lid and the box base, through which an electric cable may pass. The walls of the passage are generally provided with (or formed by) sealing means such as to prevent water from entering the casing, when the lid is closed, with or without the electric cable. A casing of this type is described in patent GB 2 269 485, wherein the sealing means are formed by two opposed gel elements, which ensure the sealed closing of the casing, when the lid is closed, with or without the electric cable. A further casing of this type is disclosed in patent US-B1-6 737 576.

Above said sealed casings of the second type have a first drawback in that they permit the closing of the lid only when the connection terminal of the pass through cable, i.e. the plug, has a primary body of reduced size, for instance a plug with a 90° cable or a plug with an aligned cable, wherein the primary body of plug has a reduced length.

Moreover it has been noticed that the casings of the second type provide snapping locking means for the lid of the base box, which may be actuated by means of opening systems, which sometimes are difficult to use, or unsafe (i.e. they are easily and unintentionally activated, due to persons or objects or water sprays hitting the casing), sometimes limiting the possibility to place two or more sealed casings adjacent to each other.

The object of the present invention is to provide a sealed casing which may solve above said problems with reference to the known art.

This object is achieved by means of a sealed casing as generally defined by appended claim 1. Advantageous embodiments of as sealed container according to the present invention are defined by the appended dependent claims.

The present invention also concerns an electric socket according to claim 7.

Further characteristics and advantages of a sealed casing according to the invention wall become apparent from the following description of non limiting exemplary embodiments of the same, wherein:
- fig. 1 shows a perspective view, with an open lid, of a sealed casing according to a particularly preferred embodiment of the present invention,
- fig. 2 shows a perspective and angled view of the sealed casing of fig. 1, with a closed lid;
- fig. 3 shows a plane elevation front view of casing of fig. 1, with a closed lid; and
- fig. 4 shows a lower view of casing of fig. 1, with a closed lid.

In the figures, same or similar elements bear the same reference numerals.

With reference to appended figures, a sealed casing according to a particularly preferred embodiment of the present invention is generally shown at 1. The sealed casing 1 is such as to house one or more electrical apparatuses, not shown, such as to be protected from contact with liquids or moisture, for example a combinations comprised of a circuit breaker associated to an electric socket. Such electrical apparatuses may be of the modular type, i.e. formed by sockets which may be removably coupled to the sealed casing 1, or integral with same.

The sealed casing 1 comprises a base 2, of insulating material and generally box-shaped, provided with a housing 3 to receive one or more electrical apparatuses. Base 2 may be directly fixed to a plane wall or fixed to a further box (not shown), for example a wall recess mounted box. In this case, between base 2 and box there may be provided sealing means which are known to the skilled in the art and therefore are not described in further detail.

The sealed casing 1 comprises a lid 4, also in insulating material, which is rotatably coupled to base 2 and may be moved between an open position and a closed position in order to allow o inhibit access from outside the sealed casing 1 to the housing 3 provided in base 2. In a particularly preferred embodiment, the lid 4 comprises a side, rotatably hinged, for example by means of a pin 5, to a side of base 2. More preferably, between the lid 4 and base 2, an elastic snapping system, not shown, is provided, such as to render one of the open and closed position, or even both, stable equilibrium positions.

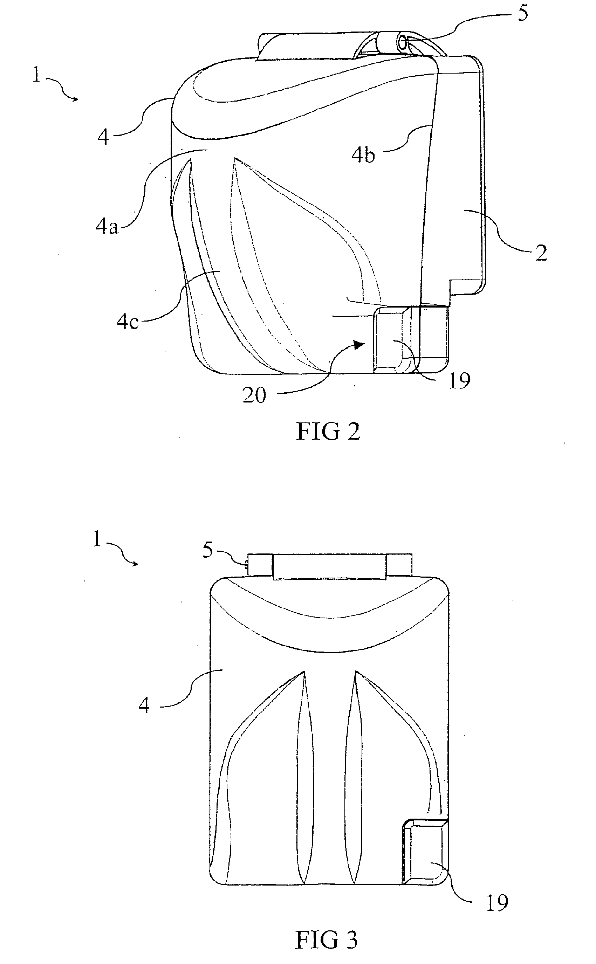

As can be easily seen in fig. 2. and 4, lid 4 comprises an external surface, generally dome or bell shaped, with a generally centered region 4a, distally positioned with respect to base 2 and significantly protruding with respect to an edge portion 4b or lid 4, proximal to base 2. In the present description, the term "central region" refers to an internal region of edge portion 4b. Preferably, this dome or bell is internally hollow, so that for instance, if the electrical apparatus to be housed inside casing 1 is an electric socket, it is possible to size the lid 4 in order to allow its complete closing when any type of plug is inserted into the socket (or the vast majority of plugs used in the world, with aligned or perpendicular cable/pin arrangement), such as for example a plug according to following standards: Italian plug with aligned cable (i.e. aligned with plug pins), Italian plug with "90 degree" cable, "shuko" plug with aligned cable, "shuko" plug with "90 degree" cable.

Preferably, as best shown in fig. 2, lid 4 is provided with an external surface having a central bulge or nose-like protrusion 4c, which facilitates a manual grasp of lid 4 for opening and/or closing the same.

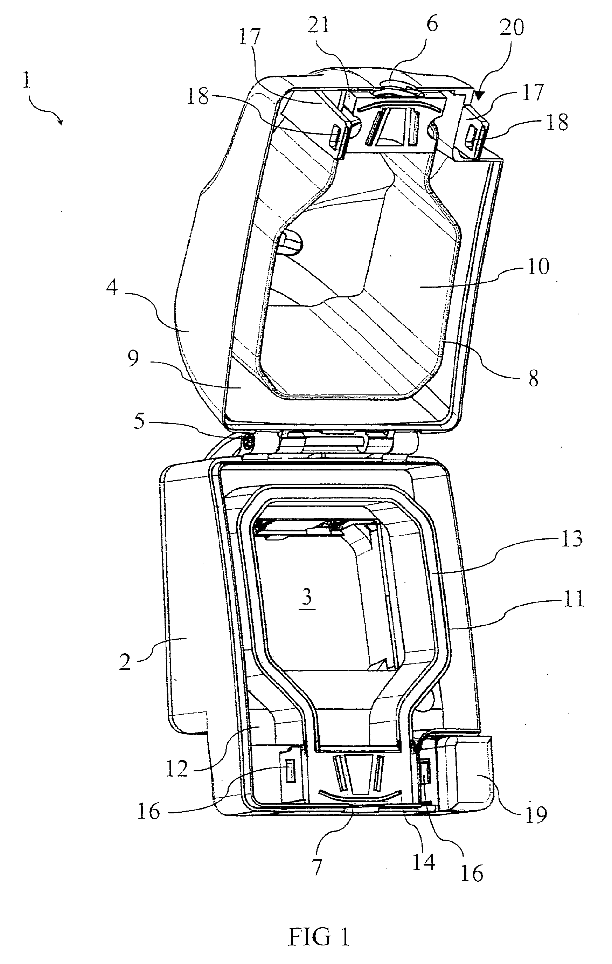

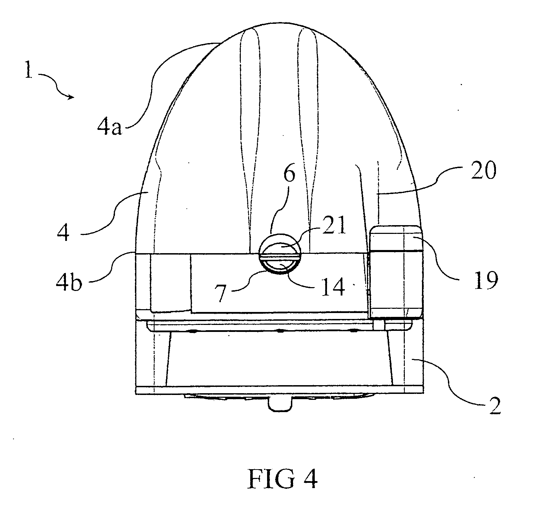

Returning to fig. 1, between lid 4 and base 2 a passage 6, 7 is provided for allowing an electrical cable to pass through the walls of sealed casing 1, between its inside and outside, in order to connect such cable, even when lid 4 is in its closed position, to an electrical apparatus housed in housing 3. For example, the passage 6, 7 is formed by two half moon recesses 6, 7 (best seen in fig. 4) facing one another and provided on adjacent and opposed walls of lid 4 and base 2, respectively.

In a particularly advantageous embodiment, lid 4 internally comprises a partition wall 8, which defines a guard chamber 9 of lid 4 and an internal chamber 10, which is surrounded by the guard chamber 9. Similarly, also base 2 comprises an internal partition wall 11, defining a guard chamber 12 of base 2 and an internal chamber 3 of base 2, surrounded by guard chamber 12 of base 2. In practice, internal chamber 3 of base 2 represents the housing of electrical apparatus to be received inside the sealed casing 1. The partition walls 8, 11 of lid 4 and base 2 are opposing each other and cooperate in order to form a internal protected chamber (formed by joining the internal chamber 10 of lid 4 to housing 3) when lid 4 is in a closed position. This internal protected chamber has an opening corresponding to passage 6, 7.

In a particularly preferred embodiment, a slot is provided in partition wall 11 of base 2 in order to form a seat for seal 13. This seal 13 cooperates with partition wall 10 of lid 4 in order to seal the internal protected chamber 10, 3. More preferably, seal 13 surrounds seat 3 and has a sealing element 14 corresponding to recess 7, such as to cooperate with an opposed sealing element 21 provided on lid 4. The sealing elements 14 and 21 are preferably blocks of deformable plastic material, for example, but not only, as those described in patent FR 2823608. Such sealing elements, as they cooperate with each other when the lid is closed, are able to ensure the sealing of the internal protected chamber 3, 10, with or without a cable passing through passage 6, 7.

It is to be noted that, in an alternative embodiment, with respect to the above, the slot and the seal 13 may be provided in partition wall 8 of lid 4 as opposed to the partition wall 11 of base 2.

As shown in fig. 1, the sealed casing 1 comprises locking means 16, 17, 18 such as to lock the lid 4 and base 2 in their closed position. In the particular example shown in fig. 1, these locking means are snapping locking means comprising a pair of small teeth 16 provided in base 2 which may engage respective recesses 18 provided in respective tabs 17 protruding from lid 4 toward base 2. These teeth 16 are joined together for example by means of an U-shaped bar, not shown, such as to be positioned in an advanced or retracted position, for engaging and disengaging respective recesses 18. Preferably, teeth 16 are forced in the advanced position by elastic means (not shown). In base 2 a release button 19 is provided, which, when actuated, moves teeth 16 into the retracted position, allowing opening of lid 4.

It is to be noted that above said locking mechanism represents only one possible example for a locking mechanism used in casing 1, and that locking mechanisms of different type, operated by a release button 19, may be provided in sealed casing 1.

A recess 20 provided in lid 4 advantageously allows access by user to release button 19 when lid 4 is in a closed position. Such a recess 20 is best shown in fig. 2, 3, 4. As can be noted from figures, recess 20 of lid 4 allows the release button 19 to be positioned on front of casing 1, in a retracted position with respect to lid 4. This advantageously ensures a certain degree of protection against undesired unlocking of lid 4, for example by reducing the chance that release button 19 is operated by an accidental impact. Moreover the provision of button 19 in a frontal position allows adjacent mounting of two or more casings 1.

It is to be noted that in the particularly preferred embodiment shown in figures, in the closed position, lid 4 overlaps base 2, entirely covering the same with the exception of its region receiving the release button 19. Moreover, in the particular embodiment of the description, base 2 and lid 4 have a generally square external contour, the release button 19 is generally positioned at a corner of base 2 and recess 20 is provided near the corresponding corner of lid 4. Moreover, as best shown by fig. 2 and 4, lid 4 has walls which generally protrude perpendicularly from base 2, at recess 20. This advantageously ensures an easier use since these walls ergonomically guide an operator finger towards the release button 19.

As is evident from above description, and as confirmed by severe experimental tests, a casing according to the present invention completely overcomes above said drawbacks with respect to casings of the known art.

Obviously, a skilled in the art, in order to meet specific and contingent needs, may introduce numerous modifications and variants to the particular example of sealed casing, which are all included in the protection scope as defined by the following claims.

## Claims

1. Sealed casing (1) for at least one electrical apparatus, comprising:
- a generally box-shaped base (2), including a housing (3) for containing said electrical apparatus, said base (2) having a generally square outer perimeter;
- a lid (4) having a generally square outer perimeter and rotatably coupled to said base (2), which is movable between an open position and a closed position for allowing or inhibiting access from outside the casing (1) to the housing (3), said lid comprising a recess;
- snap locking means (16, 17, 18) for locking the lid (4) to the base (2) in the closed position;
- a passage (6, 7), defined between the base (2) and the lid (4), through which an electrical cable may pass, which may be connected to said electrical apparatus;
- a release button (19) which can be actuated for releasing said snap locking means (16, 17, 18);
**characterized in that**:
- the lid (4) has a generally dome or bell shaped external surface, with generally central region (4a), distally positioned with respect to base (2) and greatly protruding with respect to an edge portion (4b) of the lid (4), proximal to base (2); and
- said release button is provided on the side of base (2) facing towards the lid (4), said recess (20) of the lid being disposed at button (19) for allowing access to said button (19) when the lid is closed, said release button (19) being generally positioned at a corner of base (2) and the recess (20) being provided near the corresponding corner of lid (4).

2. Sealed casing (1) according to claim 1, wherein the lid (4), in the closed position, overlaps the base (2), entirely covering the same with the exception of its region receiving the release button (19).

3. Sealed casing (1) according to any of the preceding claims, wherein the lid (4) has walls which, at recess (20), protrude in a generally perpendicular direction towards base (2).

4. Sealed casing (1) according to claim 1, wherein the electrical apparatus is an electric socket and wherein said dome is internally hollow and sized to allow a complete closing of lid (4) when in said socket a plug is inserted, having a cable axially aligned to plug pins or perpendicular to said pins.

5. Sealed casing (1) according to any of preceding claims, wherein the lid (4) internally comprises a partition wall for lid (8), defining a lid guard chamber (9) and an internal lid chamber (10), surrounded by said lid guard chamber (9), and wherein the base (2) internally comprises a partition wall (11) defining a base guard chamber (12) and an internal base chamber (3) surrounded by said base guard chamber (12), the internal base chamber (3) forming the housing for said electrical apparatus, said partition walls (8, 11) being opposed to each other and cooperating when said lid (4) is in its closed position.

6. Sealed casing (1) according to claim 5, wherein said base partition wall (11) comprises a slot such as to receive a seal (13) surrounding said internal base chamber (3) and including, at said passage (6, 7), sealing means (14) which sealingly engage said cable.

7. Electrical socket including a socket and a sealed casing (1) according to any of the preceding claims.

## Patentansprüche

1. Abgedichtete Kapselvorrichtung (1) für zumindest eine elektrische Vorrichtung, umfassend:
eine im Allgemeinen behälterförmige Basis (2), die ein Gehäuse (2) zum Aufnehmen der elektrischen Vorrichtung aufweist, wobei die Basis (2) einen im Allgemeinen rechteckigen Außenumfang aufweist,
einen Deckel (4), der einen im Allgemeinen rechteckigen Außenumfang aufweist und drehbar an die Basis (2) gekoppelt ist, der zwischen einer offenen Position und einer geschlossenen Position beweglich ist, um von außerhalb der Kapselvorrichtung (1) Zugang zum Gehäuse (3) zu gewähren oder zu verhindern, wobei der Deckel eine Aussparung umfasst,
ein Einschnapp-Verriegelungsmittel (16, 17, 18) zum Verriegeln des Deckels (4) an die Basis (2) in der geschlossenen Position,
einen zwischen der Basis (2) und dem Deckel (4) definierten Durchgang (6, 7), durch den ein elektrisches Kabel gelangen kann, das mit der elektrischen Vorrichtung verbunden sein kann,
einen Freigabeknopf (19), der zum Freigeben des Einschnapp-Verriegelungsmittels (16, 17, 18) betätigt werden kann,
**dadurch gekennzeichnet, dass**:
der Deckel (4) eine im Allgemeinen kuppel- oder glockenförmige Außenfläche mit einer im Allgemeinen mittigen Region (4a) aufweist, die entfernt zur Basis (2) positioniert ist und bezüglich eines nahe zur Basis (2) befindlichen Kantenabschnitts (4b) des Deckels (4) deutlich hervorsteht, und
der Freigabeknopf an der in Richtung des Deckels (4) weisenden Seite der Basis (4) vorgesehen ist, wobei die Aussparung (20) des Deckels am Knopf (19) angeordnet ist, um einen Zugang zum Knopf (19) zu gewähren, wenn der Deckel geschlossen ist, wobei der Freigabeknopf (19) im Allgemeinen an einer Ecke der Basis (2) positioniert ist und die Aussparung (20) nahe der entsprechenden Ecke des Deckels (4) vorgesehen ist.

2. Abgedichtete Kapselvorrichtung (1) gemäß Anspruch 1, bei welcher der Deckel (4) in der geschlossen Position die Basis (2) überlappt, und hierdurch diese mit Ausnahme ihrer den Freigabeknopf (19) empfangenden Region vollständig abdeckt.

3. Abgedichtete Kapselvorrichtung (1) gemäß einem der vorangegangene Ansprüche, bei welcher der Deckel (4) Wände aufweist, die an der Aussparung (20) in einer im Allgemeinen senkrechten Richtung zur Basis (2) hervorstehen.

4. Abgedichtete Kapselvorrichtung (1) gemäß Anspruch 1, bei der die elektrische Vorrichtung eine elektrische Steckerbuchse ist, und bei der die Kuppel innen hohl ist und so dimensioniert ist, um ein komplettes Schließen des Deckels (4) zu gewähren, wenn in die Steckerbuchse ein Stecker eingeführt ist, der ein axial angeordnetes Kabel zum Einstecken von Stiften oder senkrecht zu den Stiften aufweist.

5. Abgedichtete Kapselvorrichtung (1) gemäß einem der vorangegangen Ansprüche, bei welcher der Deckel (4) intern eine Trennwand für einen Deckel (8) umfasst, die eine Deckelschutzkammer (9) und eine durch die Deckelschutzkammer (9) umgebene interne Deckelkammer (10) definiert, und bei der die Basis (2) intern eine eine Basisschutzkammer (12) und eine durch die Basisschutzkammer (12) umgebene interne Basiskammer (3) definierende Trennwand (11) umfasst, und wobei die interne Basiskammer (3) das Gehäuse für die elektrische Vorrichtung ausbildet, wobei die Trennwände (8, 11) gegenseitig gegenüberliegen und miteinander zusammenwirken, wenn sich der Deckel (4) in seiner geschlossenen Position befindet.

6. Abgedichtete Kapselvorrichtung (1) gemäß Anspruch 5, bei der die Basistrennwand (11) einen Schlitz umfasst, um eine die interne Basiskammer (3) umgebende Dichtung (13) zu empfangen, und an dem Durchgang (6, 7) ein Dichtmittel (14) aufweist, das abdichtend mit dem Kabel in Eingriff ist.

7. Elektrische Steckerbuchse, die eine Steckerbuchse und eine abgedichtete Kapselvorrichtung (1) gemäß einem der vorangegangenen Ansprüche aufweist.

## Revendications

1. Boîtier étanche (1) destiné à recevoir au moins un appareil électrique, comprenant :
- une base en général en forme de boîte (2), comprenant un logement (3) destiné à contenir ledit appareil électrique, ladite base (2) présentant un périmètre extérieur en général carré ;
- un couvercle (4) qui présente un périmètre extérieur en général carré et relié de manière rotative à ladite base (2), qui est mobile entre une position ouverte et une position fermée de façon à permettre ou à empêcher l'accès au logement (3) à partir de l'extérieur du boîtier (1), ledit couvercle comprenant un évidement ;
- des moyens de verrouillage à déclic (16, 17, 18) destinés à verrouiller le couvercle (4) sur la base (2) dans la position fermée ;
- un passage (6, 7), défini entre la base (2) et le couvercle (4), à travers lequel un câble électrique peut passer, qui peut être relié audit appareil électrique ;
- un bouton de libération (19) qui peut être actionné de façon à libérer lesdits moyens de verrouillage à déclic (16, 17, 18) ;
**caractérisé en ce que** :
- le couvercle (4) présente une surface extérieure en général en forme de dôme ou de cloche, avec une région (4a) en général centrale, positionnée de manière distale par rapport à la base (2) et faisant considérablement saillie par rapport à une partie de bord (4b) du couvercle (4), proximale de la base (2) ; et
- ledit bouton de libération est disposé sur le côté de la base (2) qui fait face au couvercle (4), ledit évidement (20) du couvercle étant disposé au niveau du bouton (19) de façon à permettre l'accès audit bouton (19) lorsque le couvercle est fermé, ledit bouton de libération (19) étant positionné en général au niveau d'un coin de la base (2) et la cavité (20) étant disposée à proximité du coin correspondant du couvercle (4).

2. Boîtier étanche (1) selon la revendication 1, dans lequel le couvercle (4), dans la position fermée, recouvre la base (2), en la couvrant entièrement à l'exception de sa région qui reçoit le bouton de libération (19).

3. Boîtier étanche (1) selon l'une quelconque des revendications précédentes, dans lequel le couvercle (4) présente des parois qui font saillie, au niveau de l'évidement (20), dans une direction en général perpendiculaire vers la base (2).

4. Boîtier étanche (1) selon la revendication 1, dans lequel l'appareil électrique est une prise de courant femelle et dans lequel ledit dôme est creux à l'intérieur et présente des dimensions qui permettent une fermeture complète du couvercle (4) quand une fiche électrique mâle est insérée dans la prise électrique femelle, qui présente un câble aligné de manière axiale de façon à enficher les broches ou perpendiculaires auxdites broches.

5. Boîtier étanche (1) selon l'une quelconque des revendications précédentes, dans lequel le couvercle (4) comprend à l'intérieur une cloison de séparation de couvercle (8), qui définit une chambre de protection de couvercle (9) et une chambre de couvercle interne (10), entourée par ladite chambre de protection de couvercle (9), et dans lequel la base (2) comprend à l'intérieur une cloison de séparation (11) qui définit une chambre de protection de base (12) et une chambre de base interne (3) entourée par ladite chambre de protection de base (12), la chambre de base interne (3) formant le logement destiné à recevoir ledit appareil électrique, lesdites cloisons de séparation (8, 11) étant opposées les unes par rapport aux autres et coopérant lorsque ledit couvercle (4) se trouve dans sa position fermée.

6. Boîtier étanche (1) selon la revendication 5, dans lequel ladite cloison de séparation de base (11) comprend une fente destinée à recevoir un joint d'étanchéité (13) qui entoure ladite chambre de base interne (3) et comprenant, au niveau dudit passage (6, 7), des moyens d'étanchéité (14) qui viennent en prise de manière étanche avec ledit câble.

7. Prise de courant femelle comprenant une prise et un boîtier étanche (1) selon l'une quelconque des revendications précédentes.
